# EUROPEAN PATENT SPECIFICATION

(11) **EP 1 384 742 B1**
(45) Date of publication and mention of the grant of the patent: **13.01.2010**
(21) Application number: 03077271.9
(22) Date of filing: 17.07.2003
(51) Int. Cl.: C08G 77/46, C09D 183/12

(54) **Cross-linkable compounds comprising a perfluoropolyether moiety**
Vernetzbare Perfluorether-Einheiten enthaltende Verbindungen
Composés réticulable comprenant un fragment perfluoropolyéther

(30) Priority: 26.07.2002 EP 02078182
(43) Date of publication of application: 28.01.2004
(73) Proprietor: Océ-Technologies B.V., 5914 CC Venlo (NL)
(72) Inventor: Cornelissen, Ronald H.C., 5703 HJ Helmond (NL); van Zeeventer, Karel P.D., 5985 NR Grashoek (NL); Markies, Peter R., 5971 GC Grubbenvorst (NL); Verbeek, Guy P.M., 3680 Maaseik (BE); Verbunt, Joannes A., 5941 AW Velden (NL); De Jong, Sandra M., 5913 RG Venlo (NL); Zeelen, Peter Maria Cornelis, 5993 AA Maasbree (NL)
(74) Representative: Janssen, Paulus J. P.

(56) References cited:
- EP-A- 0 770 634
- US-A- 4 440 918
- US-A- 4 565 714
- US-A- 5 026 606

## Description

The invention pertains to a cross-linkable compound comprising a perfluoropolyether (PFPE) moiety which is ultimately terminated by an oxygen atom and bonded through a spacer attached to the said oxygen atom with an ethylenically unsaturated group. The invention further pertains to a perfluoropolyether rubber obtainable by hydrosilating said cross-linkable compound and to an apparatus for transferring a toner image from an image-forming medium to a receiving medium comprising said perfluoropolyether rubber.

Cross-linkable compounds comprising PFPE are known in the art, for instance from US Pat. No. 4,565,714 that describes a low surface energy material that is a hydrosilation reaction product of a compound containing fluorine and aliphatic unsaturation with a compound containing silicon-bonded hydrogen. Such compositions can be cured to a low surface energy material that in coating form Is effective as a release surface for use with the most aggressive class of adhesives known in the art or for other applications requiring low adhesion. These compound have a linking group that connects the unsaturation with the polymer and is for example selected from esters, amides, urethane, and ethers such as -CH₂-O-, -CH₂-NH-(C=O)-, -CH₂-NH(C=O)-O-, and -(CH₂)-[-(CH₂)-]N(C=O)-, whereas the unsaturation is vinyl (-CH=CH₂) or an alkyl or phenyl substituted derivative thereof. The present invention pertains to compounds that are derived from PFPE moieties that are hydroxy-terminated, commonly known as hydroxy-terminated PFPE-oils. These hydroxy-terminated PFPE oils can be easily coupled, through reaction with the hydroxy group, to an ethylenically unsaturated group as known in the art. This leads to the compound as worded in the above introduction. These compounds appear to be in particular usefull for anti-stick purposes. For instance, methylol-terminated perfluoropolyethers can serve as a basis for making the compounds to which the present invention pertains. These PFPE compounds are disclosed as intermediates to other monomers and are prepared by reduction of esters, e.g., by reaction with lithium aluminum hydride or sodium borohydride. Reaction of these alcohols with ethylenically unsaturated halides, e.g., allyl bromide, in the presence of sodium hydride or potassium hydroxide provides ethylenically unsaturated PFPE's. It was, however, found that the known low surface energy materials deteriorate after a couple of months, especially when used at elevated temperatures, leading to loss of their non-sticking properties. This phenomenon Is especially undesired when the rubber is applied in top layers of apparatuses for transferring a toner image from an image-forming medium to a receiving medium.

Apparatuses for transferring a toner image from an image-forming medium to a receiving medium are known, for instance from US Pat. No. 5,742,889, which is incorporated by reference. The top layer in such apparatus is provided with a rubber that is obtained form reacting PFPE oil with a chain lengthener. However, the rubbers disclosed in this patent do not show the desired non-sticking properties after a number of months at elevated working temperatures.
It is therefore an objective of the present invention to provide a perfluoropolyether (PFPE) oil that can be used for making perfluoropolyether rubbers, that are in particular suitable for use in top layers of apparatuses for transferring a toner image from an image-formlng medium to a receiving medium, and that preserve their non-sticking properties for much longer times at elevated temperatures.

It was now surprisingly found that this objective, and other objectives for obtaining suitable rubbers, such as good visco-elastic properties including high elasticity and low compression set, is met with the above cross-linkable compounds when the spacer extends over at least three atoms between the oxygen atom and the ethylenically unsaturated group, characterized In that the cross-linkable compound has the formula: D-(CₙF₂ₙO)ₘ-Q-B-A, wherein A stands for an ethylenically unsaturated group of the formula HR₁C=CR₂R₃, wherein R₁ is selected from H, alkyl, phenyl, alkyl-substituted phenyl, and aralkyl; R₂ is selected from H, alkyl, phenyl, alkyl-substituted phenyl, aralkyl, and R₃ is a bond or SI(R₄)₂, R₄ being independently H or alkyl; B stands for a hydrocarbyl or fluorocarbylspacer extending over at least three carbon atoms; (CₙF₂ₙO)ₘ is the PFPE moiety wherein n is independently an integer of 1 to 4 and m is an integer of 2 to 500;Q is a group selected from CF₂-CH₂-O, CH₂-CH₂-O; and D stands for HO-CH₂CF₂-O- or A-B-Q-O-, wherein n, A, B, and Q have the previously given meanings. Thus, the "distance" between the oxygen atom which terminates the compound comprising the PFPE-molety and the ethylenically unsaturated group involves at least three atoms in a row. It was found that this way good monomers for providing suitable rubbers can be obtained.
In an embodiment, the spacer extends over at least four atoms. It was found that this embodiment can provide monomers that lead to even better rubbers.

In the above definition alkyl is preferably a branched or unbranched alkyl group with 1 to 4 carbon atoms, such as methyl, ethyl, propyl, isopropyl, n-butyl, isobutyl, sec-butyl, and the like. The alkyl group in the substituted phenyl preferably has the same meaning. The term "aralkyl" means an aryl substituted alkyl group, wherein the branched or unbranched alkyl group preferably has 1 to 6 carbon atoms and the aryl group preferably is phenyl.
In the formula (CₙF₂ₙO)ₘ for the PFPE moiety is "n" Independently selected. Thus this formula includes both homopolymers (wherein the values "n" are the same for each recurring monomeric unit) and co-polymers, wherein the PFPE moiety is built up of different recurring monomers with different values "n", for instance PFPE moieties that are built from both (CF₂O) and (CF₂CF₂O) recurring units. Preferably, the PFPE moiety has a molecular weight of about 1,000 to 20,000. Thus with preference, dependent on the molecular weight of the monomeric units, m Is between 4 and 300. Such PFPE moieties are known in the art, for instance from US Pat. Appln. No. 2001/0008916 A1, which is incorporated by reference.
The above compounds can be hydrosilated by bringing about a condensation of a silicon-hydrogen-containing compound with the ethylenically unsaturated PFPE compound, preferably in the presence of a hydrosilating catalyst. "Hydrosilation" means a reaction involving the addition of a silicon-hydrogen group across a pair of aliphatic unsaturated carbon atoms, i.e., carbon atoms joined by double bonds. The reaction can be illustrated by the following general equation: ≡Si-H + C=C => ≡Si-C-CH.
"Perfluoropolyether" ("PFPE") in the sense of the invention means a polyether, i.e. a compound comprising a chain of at least two alkoxy groups, the alkylene groups, which can be branched or are straight chains and which groups are completely, or at least to a substantial extent, fluorinated. The PFPE might occasionally comprise alkylene groups which are not completely fluorinated. In particular embodiments, the alkylene groups contain 1 to 6, preferably 1 to 4, carbon atoms but the invention is not restricted to such groups.
The hydrosilation catalysts employed in the compositions of the present invention include all of the well-known metal-containing catalysts, which are effective for catalyzing a hydrosilation reaction between silicon-bonded hydrogen groups and ethylenically unsaturated groups. These materials include, for example, the finely divided platinum catalysts, such as those described in U.S. Pat. No. 2,970,150, the chloroplatinic acid catalysts described in U.S. Pat. No. 2,823,218, the platinum hydrocarbon complexes taught in U.S. Pat. Nos. 3,159,601, 3,159,662, as well as the platinum alcoholate catalysts described in U.S. Pat. No. 3,220,972, and platinum complexes having an ultraviolet displaceable group such as are disclosed in U.S. Pat. No. 4,530,879 and the (cyclopentadienyl)(trialiphatic)platinum complexes such as are disclosed in U.S. Pat. No. 4,510,094. In addition, the platinum chloride-olefin complexes described In U.S. Pat. No. 3,416,946 are useful herein. A suitable catalyst is a platinum catalyst solution of ABCR, SIP 6832 in a concentration of 3 to 50 ppm on weight base. All of the teachings of hydrosilation catalysts in the aforesaid U.S. patents are incorporated herein by reference.

The composition of the invention can also contain other ingredients such as hydrosilation inhibitors, dyes, pigments, and reinforcing fillers, e.g., carbon black, fumed silica, titanium dioxide, etc. Furthermore, the release character of the cured composition can be modified, i.e., the value of the force required to separate an adhesive from the surface of the cured composition can be modified by any method known in the art, e.g., by the method described previously, by the addition to the composition of 0.1 to 10 parts of a release modifier per 100 parts of the composition, or by use of different primers. Preferably, the release modification provides a differential release of at least 10 percent. Such modifiers are known and include, for example, tetraalkoxyalkyl silicates such as Si(OC₂H₄OC₂H₅)₄, such as are described in U.S. Pat. No. 3,518,325; graft polymers having a polyorganosiloxane segment and an organic polymer segment as are described in U.S. Pat. No. 4,366,286; vinyl terminated diorganopolysiloxanes in which 3 to 39 mole percent of the diorgano units are non-terminal diphenylsiloxane units; and the three-dimensional toluene soluble silicate resins, known in the silicate art as MQ resin which are described in U.S. Pat. Nos. 2,676,182 and 2,857,356. Suitable cross-linkable compounds according to the invention can be made, for instance, as follows: 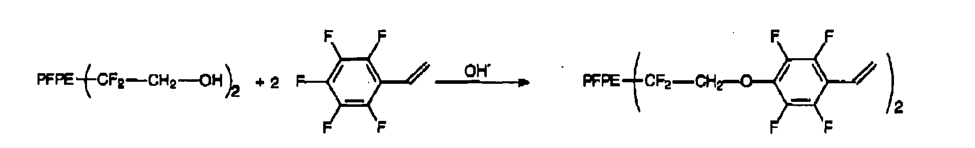 and 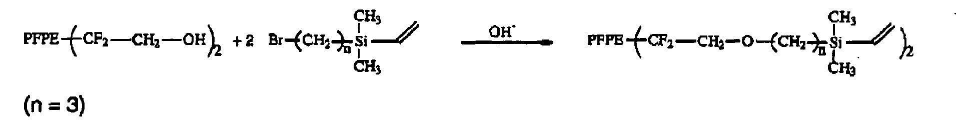 whereas from the prior art it is known to make a cross-linkable compound for instance as follows:

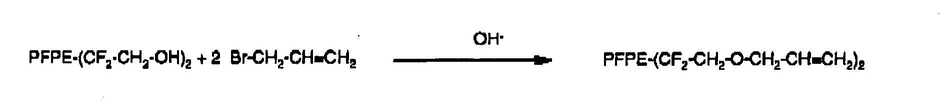

In these formulae PFPE represent any PFPE as indicated above. In the first example of an embodiment according to the invention the spacer extends over 4 carbon atoms (between the ultimate oxygen atom and the ethylenically unsaturated group). In the second example the spacer extends over 3 carbon atoms + 1 silicon atom. It was found that a spacer extending over at least three atoms, in particular carbon atoms, between the oxygen atom and the silicon atom, led to excellent rubbers. The prior art shows a spacer extending over 1 carbon atom.

The above silylalkylbromide intermediate compound is novel an can be made according to the following scheme (for example when n=4):

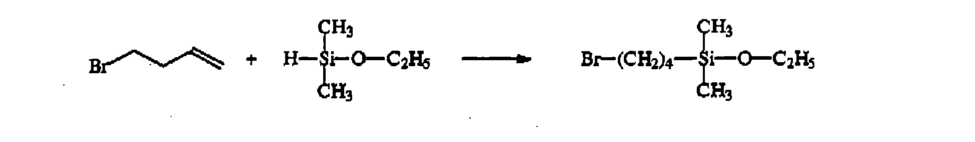

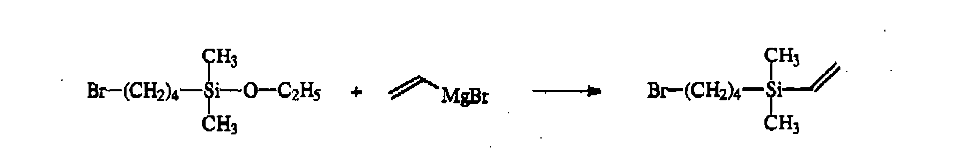

End groups that can very suitable be coupled to a hydroxy group of the linking group are, for Instance,

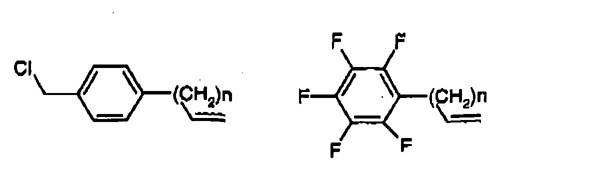

The unsaturated bond of these end groups can be hydrosilated (vulcanization) with a multi SiH cross-linker to form a silylated compound with a spacer between the unsaturated group (vinyl) and the oxygen atom of the linking group of at least 3 carbon atoms to obtain a stable bond.
Suitable SiH cross-linkers are methyl tris(dimethylslloxy)sllane ['T(Mh)3'], cyclo(tetramethyltetrasiloxane) and homologs thereof ['(Dh)x'], short linear siloxane derivatives ['M(Dh)nM'], tetrakis(dimethylsiloxy)silane ['Q(Mh)4'] and higher oligomers thereof ['Qn(Mh)m'],
To the vinyl terminated PFPE oil is added subsequently an inhibitor for obtaining sufficient pot life for good processing. A suitable inhibitor is 1-ethynylcyclohexanol ['ECH'] in a weight ratio 500-5000 ppm relative to the oil. The inhibitor is injected pure in melted form using a microliter syringe.
A SiH cross-linker is added in an amount of 1.5 - 3 equivalents of SiH groups with regard to the vinyl groups in the PFPE oil. If necessary for a better mixability, a quantity of a solvent may be added, for instance, 1,3-bis(trifluormethyl)benzene ['fluoroxylene']. After completion of mixing a hydrosilation catalyst is added, in a concentration of about 5 - 50 ppm.
After mixing, for instance with a mechanical stirrer, and degassing by evacuation, the mixture can be cross-linked (cured) in the air (coatings) or, when no solvent is used, in a mould at 120-140°C. Curing usually takes 1 - 10 minutes. Further curing may take place in the air overnight at 120°C. The hardness then further increases due to evaporation of the solvent, oxidation, and coupling of excess SiH groups.
It is also possible to apply a pre-curing of part of the PFPE oil with excess of SIH cross-linker (about 2-5 mole of SiH cross-linker per vinyl group). This is particularly useful when the mixing of PFPE oil and SiH cross-linker is insufficient. Pre-curing is for instance performed at 120°C for 0.5 h under nitrogen atmosphere in 1,3-bis(trifluorobenzene) as solvent. The 'alloy' of PFPE oil with SiH reactive silicones is obtained after evaporation of the solvent and can be stored under nitrogen.
When this reagent is strongly opaque and a silicone fraction separates, an effective separation can be achieved by extraction with low-molecular PFPE solvent ['HT 70'] and cyclohexane. A mixture of crude pre-cured product and 1 part of PFPE solvent can be separated from a silicon fraction by extraction with 1 part of cyclohexane.

The invention is further illustrated with the following non-limitative examples.

### Example 1

### 4-Bromobutyl-dimethyl-ethoxysilane

800 g of 4-bromo-1-butene were reacted with 15% excess of dimethylethoxysilane (939 ml).
In a 2 I reactor 0.5 g of Ru₃(CO)₁₂ and 800 ml of 4-bromo-1-butene were brought under nitrogen and 939 ml of dimethylethoxysilane were added under nitrogen and the mixture was brought at 65°C. After 0.5 h the bath temperature was raised to 80°C and the mixture was allowed to react overnight. After distillation 1329 g (93.7%) of 4-bromobutyl-dimethyl-ethoxysilane were isolated.

### 4-Bromobutyl-dimethyl-vinylsilane

A 3 I reactor was charged under nitrogen with 1 I of vinyl magnesium bromide in THF (tetrahydrofuran) and 184 g of 4-bromobutyl-dlmethyl-ethoxysilane were added slowly at room temperature. The mixture was then refluxed at 70°C for 16 h. After cooling on ice, the mixture was quenched with 407 g of a 20% HBr (w/w) solution, after which was stirred for another 1.5 h. The THF layers were separated from the aqueous layers and neutralized with aq. sodium hydrogencarbonate solution. The THF was evaporated and the residue was distilled In the presence of 1 g Pt/C to obtain 135,8 g (79.8%) of pure 4-bromobutyl-dimethyl-vinylsilane

### Example 2

### Coupling of 4-bromobutyl-dimethyl-vinylsilane to PFPE-oll

A 1 I reactor was charged with 200 g (91 mmole) of OH-terminated PFPE-oil (Fluorlink D, ex Ausimont s.p.a.) 220 ml of 1,3-bis(trifluoromethyl)benzene, and 48.2 g (218 mmole) of 4-bromobutyl-dimethyl-vinylsilane. The mixture was heated at 70°C under stirring until a clear colorless solution was obtained, after which a mixture of 43.3 g of a 47% KOH solution, 160 ml of demi water, and 8 g of tetrabutylammonium hydroxide was added dropwise. After reacting for 4 h at 100°C the aqueous layer was separated after which a fresh mixture of 43.3 g of a 47% KOH solution, 160 ml of demi water, and 8 g of tetrabutylammonium hydroxide was added and stirred for another 16 h at 100°C. The mixture was cooled down and the water layer was separated. The reaction mixture was washed with demi water, glacial acetic acid, and methanol. The oily residue was concentrated and stirred with 15 g of polyvinylpyridine and 100 ml of HT™70 (a nonreactive PFPE-oll with a boiling point of 70°C, ex Ausimont s.p.a.) for 3 days. After filtering and evaporation to dryness, colorless oil was obtained, more than 99% of which was coupled to the end group.

## Claims

1. A cross-linkable compound comprising a perfluoropolyether (PFPE) moiety which is ultimately terminated by an oxygen atom and bonded through a spacer attached to the said oxygen atom with an ethylenically unsaturated group, wherein the spacer extends over at least three atoms between the oxygen atom and the ethylenically unsaturated group, **characterized in that**
the cross-linkable compound of has the formula:
D-(CₙF₂ₙO)ₘ-Q-B-A,
wherein
A stands for an ethylenically unsaturated group of the formula HA₁C=CR₂R₃, wherein
R₁ is selected from H, alkyl, phenyl, alkyl-substituted phenyl, and aralkyl; R₂ is selected from H, alkyl, phenyl, alkyl-substituted phenyl, aralkyl, and R₃ Is a bond or Si(R₄)₂, R₄ being independently H or alkyl;
B stands for a hydrocarbyl or fluorocarbyl spacer extending over at least three carbon atoms;
(CₙF₂ₙO)ₘ is the PFPE moiety wherein n is independently an integer of 1 to 4 and m is an integer of 2 to 500;
Q stands for a terminating group selected from CF₂-CH₂-O, CH₂-CH₂-O, and
D stands for HO-CH₂CF₂-O- or A-B-Q-O-, wherein n, A, B, and Q have the previously given meanings.

2. A compound according to claim 1, wherein the spacer extends over at least four atoms.

3. A compound according to any one of the preceding claims, wherein said atoms of the spacer are carbon atoms.

4. The cross-linkable compound according to any one of the preceding claims wherein the hydrocarbyl spacer extends over at least four carbon atoms.

5. The cross-linkable compound according to any one of the preceding claims wherein A stands for H₂C=CH-.

6. The cross-linkable compound according to any one of the preceding claims wherein D is A-B-Q-O-, Q stands for CF₂-CH₂-O-, and B-A has the formula -C₆F₄-CH=CH₂ or - (CH₂)ₒ-SI(CH₅)₂-CH=CH₂, wherein o is 3 or 4.

7. A process for preparing the cross-linkable compound of any one of claims 1-6 comprising reacting a hydroxy-terminated PFPE compound with a compound of the formula A-B-Hal, wherein A is an ethylenically unsaturated group, B is a spacer which extends over at least three atoms and Hal is F, Cl, Br or I.

8. A process according to claim 7, wherein A, B, have the meanings of claim 4.

9. A perfluoropolyether rubber obtainable by hydrosilating the cross-linkable compound of any one of claims 1-6.

10. An apparatus for transferring a toner image from an image-forming medium to a receiving medium comprising:
an endless movable intermediate medium including a support provided with a top layer secured to the support via a rear surface, the intermediate medium being in contact with the image-forming medium in a first transfer zone;
heating means for heating the toner image on the top layer of the intermediate medium; a biasing means for contacting the intermediate medium in a second transfer zone; and
transport means for transporting the receiving medium through the second transfer zone, **characterized in that** the top layer comprises the perfluoropolyether rubber of claim 9.

## Patentansprüche

1. Vernetzbare Verbindung, enthaltend eine Perfluorpolyether- (PFPE)- Einheit, die am Ende durch ein Sauerstoffatom abgeschlossen und über einen an dieses Sauerstoffatom angehefteten Abstandshalter an eine ethylenisch ungesättigte Gruppe gebunden ist, wobei sich der Abstandshalter über wenigstens drei Atome zwischen dem Sauerstoffatom und der ethylenisch ungesättigten Gruppe erstreckt, **dadurch gekennzeichnet, daß**
die vernetzbare Verbindung die Formel hat:
D-(CₙF₂ₙO)ₘ-Q-B-A, wobei
A für eine ethylenisch ungesättigte Gruppe mit der Formel HR₁C=CR₂R₃ steht, wobei R₁ ausgewählt ist aus H, Alkyl, Phenyl, alkylsubstituiertes Phenyl und Aralkyl; R₂ ausgewählt ist aus H, Alkyl, Phenyl, alkylsubstituiertes Phenyl, Aralkyl, und R₃ eine Bindungsstelle oder Si(R₄)₂ ist, wobei R₄ unabhängig H oder Alkyl ist;
B für einen Hydrocarbyl- oder Fluorcarbyl-Abstandshalter steht, der sich über wenigstens drei Kohlenstoffatome erstreckt;
(CₙF₂ₙO)ₘ die PFPE-Einheit ist, in der n unabhängig eine ganze Zahl zwischen 1 bis 4 ist und m eine ganze Zahl zwischen 2 bis 500 ist;
Q für eine endständige Gruppe steht, die ausgewählt ist aus CF₂-CH₂-O, CH₂-CH₂-O, und D für HO-CH₂CF₂-O- oder A-B-Q-O- steht, wobei n, A, B und Q die zuvor angegebenen Bedeutungen haben.

2. Verbindung nach Anspruch 1, bei der sich der Abstandshalter über wenigstens vier Atome erstreckt.

3. Verbindung nach einem der vorstehenden Ansprüche, bei der die genannten Atome des Abstandshalters Kohlenstoffatome sind.

4. Vernetzbare Verbindung nach einem der vorstehenden Ansprüche, bei der der Hydrocarbyl-Abstandshalter sich über wenigstens vier Kohlenstoffatome erstreckt.

5. Vernetzbare Verbindung nach einem der vorstehenden Ansprüche, bei der A für H₂C=CH- steht.

6. Vernetzbare Verbindung nach einem der vorstehenden Ansprüche, bei der D A-B-Q-O-ist, Gel für CF₂-CH₂-O- steht, und B-A die Formel -C₈F₄-CH=CH₂ oder -(CH₂)ₒ-Si(CH₃)₂-CH=CH₂ hat, wobei o gleich 3 oder 4 ist.

7. Verfahren zur Herstellung der vernetzbaren Verbindung nach einem der Ansprüche 1 bis 6, umfassend die Reaktion einer hydroxy-terminierten PFPE-Verbindung mit einer Verbindung der Formel A-B-Hal, wobei A eine ethylenisch ungesättigte Gruppe ist, B ein Abstandshalter ist, der sich über wenigstens drei Atome erstreckt, und Hal, F, CI, Br oder I ist.

8. Verfahren nach Anspruch 7, bei dem A, B die Bedeutungen nach Anspruch 4 haben.

9. Perfluorpolyether-Gummi, erhältlich durch Hydrosilation der vernetzbaren Verbindung nach einem der Ansprüche 1 bis 6.

10. Vorrichtung zur Übertragung eines Tonerbildes von einem Bilderzeugungsmedium auf ein Empfangsmedium, umfassend:
ein endloses bewegliches Zwischenmedium, das einen Träger aufweist, der mit einer über eine rückwärtige Oberfläche mit dem Träger verbundenen Deckschicht versehen ist, wobei das Zwischenmedium in einer ersten Übertragungszone mit dem Bilderzeugungsmedium in Kontakt steht,
eine Heizeinrichtung zum Erhitzen des Tonerbildes auf der Deckschicht des Zwischenmediums;
eine Vorspanneinrichtung zur Anlage an dem Zwischenmedium in einer zweiten Übertragungszone; und
eine Transporteinrichtung zum Transport des Empfangsmediums durch die zweite Übertragungszone, **dadurch gekennzeichnet, daß** die Deckschicht das Perfluorpolyether-Gummi nach Anspruch 9 enthält.

## Revendications

1. Composé réticulable comprenant une partie perfluoropolyéther (PFPE) qui présente une extrémité de terminaison avec un atome d'oxygène et qui est liée grâce à un espaceur fixé audit atome d'oxygène avec un groupe éthyléniquement insaturé, où l'espaceur s'étend sur au moins trois atomes entre l'atome d'oxygène et le groupe éthyléniquement insaturé, **caractérisé en ce que**
le composé réticulable a la formule :
D-(CₙF₂ₙO)ₘ-Q-B-A, où
A correspond à un groupe éthyléniquement insaturé de formule HR₁C=CR₂R₃, où R₁ est choisi parmi H, alkyle, phényle, phényle substitué par un alkyle, et aralkyle ; R₂ est choisi parmi H, alkyle, phényle, phényle substitué par un alkyle, aralkyle, et R₃ est une liaison ou Si(R₄)₂, R₄ étant indépendamment H ou alkyle ;
B correspond à un espaceur hydrocarbyle ou fluorocarbyle s'étendant sur au moins trois atomes de carbone ;
(CₙF₂ₙO)ₘ est la fraction de PFPE où n est indépendamment un entier de 1 à 4 et m est un entier de 2 à 500 ;
Q correspond à un groupe de terminaison choisi parmi CF₂-CH₂-O, CH₂-CH₂-O, et
D correspond à HO-CH₂CF₂-O- ou A-B-Q-O-, où n, A, B, et Q ont les significations données précédentes.

2. Composé selon la revendication 1, dans lequel l'espaceur s'étend sur au moins quatre atomes.

3. Composé selon l'une quelconque des revendications précédentes, dans lequel lesdits atomes de l'espaceur sont des atomes de carbone.

4. Composé réticulable selon l'une quelconque des revendications précédentes, dans lequel l'espaceur hydrocarbyle s'étend sur au moins quatre atomes de carbone.

5. Composé réticulable selon l'une quelconque des revendications précédentes, dans lequel A correspond à H₂C=CH-.

6. Composé réticulable selon l'une quelconque des revendications précédentes, dans lequel D est A-B-Q-O-, Q correspond à CF₂-CH₂-O-, et B-A a la formule -C₆F₄-CH=CH₂ ou -(CH₂)ₒ-Si(CH₃)₂-CH=CH₂, où o est 3 ou 4.

7. Procédé pour préparer le composé réticulable selon l'une quelconque des revendications 1 à 6, consistant à faire réagir un composé PFPE à terminaison hydroxyle avec un composé de formule A-B-Hal, où A est un groupe éthyléniquement insaturé, B est un espaceur qui s'étendent sur au moins trois atomes et Hal est F, CI, Br ou I.

8. Procédé selon la revendication 7, dans lequel A, B, ont les significations de la revendication 4.

9. Caoutchouc de perfluoropolyéthère pouvant être obtenu par hydrosilation du composé réticulable selon l'une quelconque des revendications 1 à 6.

10. Appareil pour transférer une image composée de toner à partir d'un organe de formation d'image à un organe de réception comprenant :
un organe intermédiaire sans bout qui peut être déplacé comprenant un support muni d'une couche supérieure fixée au support par une surface arrière, l'organe intermédiaire étant en contact avec le milieu de formation d'image dans une première zone de transfert ;
des moyens de chauffage pour chauffer l'image composée sur la couche supérieure du milieu intermédiaire ;
un moyen de sollicitation pour mettre en contact l'organe intermédiaire dans une deuxième zone de transfert ; et
des moyens de transport pour transporter l'organe de réception par la deuxième zone de transfert, **caractérisé en ce que** la couche supérieure comprend le caoutchouc de perfluoropolyéthère de la revendication 9.
